# EUROPEAN PATENT APPLICATION

(11) **EP 3 213 942 A1**
(43) Date of publication of application: **06.09.2017**
(21) Application number: 15853830.6
(22) Date of filing: 27.10.2015
(51) Int. Cl.: B60G 17/015, B60G 17/08

(54) **DAMPER CONTROL APPARATUS**

(30) Priority: 27.10.2014 JP 2014217943
(71) Applicant: KYB Corporation, Tokyo 105-6111 (JP)
(72) Inventor: KUBOTA, Tomoo, Tokyo 105-6111 (JP); OKUMURA, Masatoshi, Tokyo 105-6111 (JP)
(74) Representative: MFG Patentanwälte Meyer-Wildhagen Meggle-Freund Gerhard PartG mbB
(86) International application number: PCT/JP2015/080177
(87) International publication number: WO 2016/068104

(57) **Abstract**

Provided is a damper control device that exerts appropriate damping force to improve ride quality in a vehicle even when the vehicle gets over a projection on a road surface.

In order to achieve the above object, the damper control device E1 according to the solutions to the problems of the present invention includes a correction unit 3 that corrects the damping force of a damper D based on information from which a temporal variation amount εv of a damper velocity Vd of the damper D can be grasped and level information I** from which a damping force characteristic level that is the magnitude of a damping force characteristic of the damper D can be grasped. The damper control device E1 can suppress occurrence of distortion in a characteristic of transmission damping force regardless of the magnitude of the damping force characteristic level, and does not cause a lack of the damping force by reducing the damping force more than necessary when the damping force characteristic level is small. Therefore, the damper control device E1 exerts the appropriate damping force to improve the ride quality in the vehicle even when the vehicle gets over the projection on the road surface.

## Description

### Technical Field

The present invention relates to a damper control device.

### Background Art

An example of a damper control device that controls damping force of a damper interposed between a sprung member and an unsprung member of a vehicle includes the damper control device that adjusts the damping force of the damper by adjusting a current amount to be supplied to a solenoid valve provided in the damper.

As disclosed in JP 11-287281 A, such a damper control device can perform an adjustment so that the damper has a soft damping force characteristic or a hard damping force characteristic by supplying the current amount that depends on the damping force characteristic of the damper to a solenoid. For example, in a case where the damping force characteristic of the damper is set to be soft, a constant current amount corresponding to the soft damping force characteristic is supplied to the solenoid, and in a case where the hard damping force characteristic needs to be set, a constant current amount corresponding to the hard damping force characteristic is supplied to the solenoid (for example, refer to Patent Literature 1).

### Citation List

### Patent Literature

Patent Literature 1: JP 11-287281 A

### Summary of the Invention

### Problems to be Solved by the Invention

Such a damper control device supplies a constant current that depends on the damping force characteristic to the solenoid unless the sprung member of the vehicle considerably vibrates.

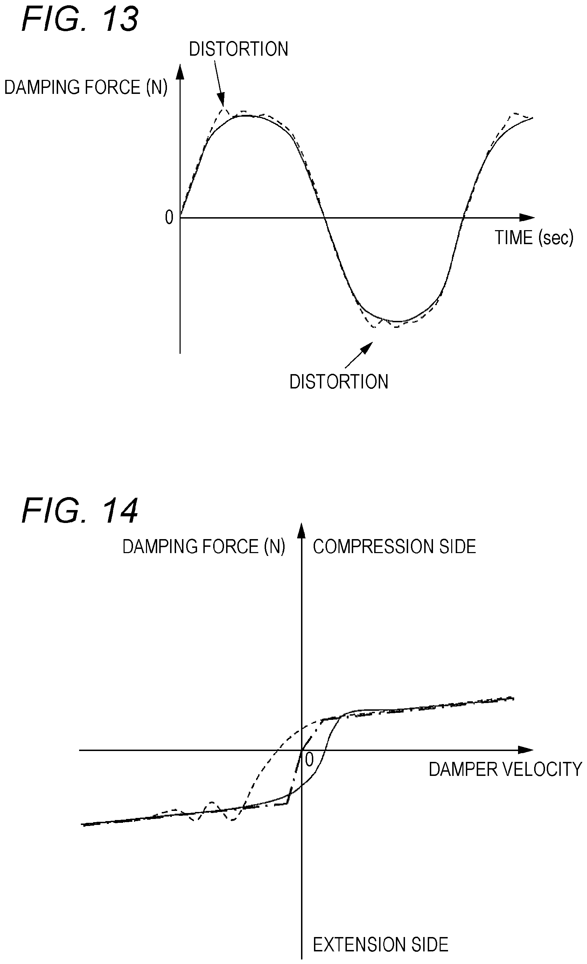

Meanwhile, the damper is attached to the sprung member and the unsprung member via a mount made of rubber. A spring characteristic of the mount has a non-linear characteristic with respect to an extension/contraction amount, and a certain period of time is spent on an opening response of a valve in the damper. Due to such an influence, when the vehicle gets over a projection on a road surface, with respect to an ideal damping force waveform illustrated by a solid line in Fig. 13, distortion occurs in force (hereinafter simply referred to as "transmission damping force"), i.e. the damping force generated by the damper and delivered to a vehicle body via the mount or an upper bush, as illustrated by a broken line in Fig. 13, and a point at which the damping force changes rapidly appears. Consequently, ride quality in the vehicle might be deteriorated.

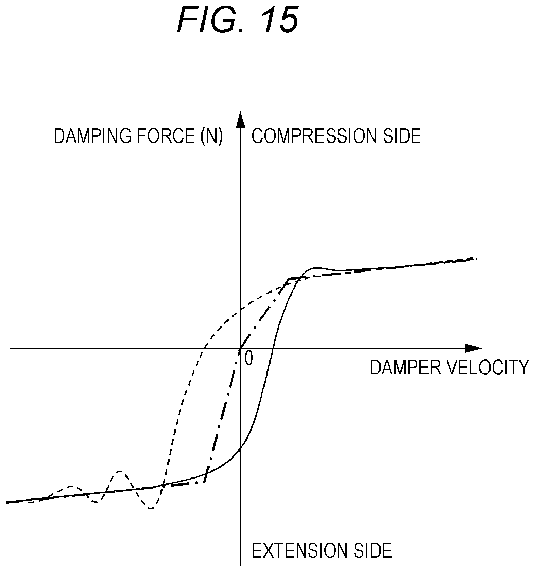

A possible way to reduce the distortion of the waveform is to decrease the damping force of the damper in advance when the distortion is estimated. However, a distortion amount varies in accordance with a damping force characteristic level that is the magnitude of the damping force characteristic of the damper. The higher a damper velocity that is an extension/contraction velocity of the damper is, the greater the damping force exerted by the damper is. When the damping force characteristic that is the characteristic of the damping force exerted by the damper with respect to the extension/contraction velocity is increased, a damping coefficient increases, and the damper exerts the great damping force as compared with the case where the damping force characteristic is small even at the same velocity. As illustrated in Figs. 14 and 15, the amount of the characteristic of the transmission damping force of the damper (solid line and broken line in Fig. 15) distorted with respect to an ideal damping force characteristic (dashed-dotted line in Fig. 15) at a large damping force characteristic level tends to be larger than the amount of the characteristic of the transmission damping force of the damper (solid line and broken line in Fig. 14) distorted with respect to an ideal damping force characteristic (dashed-dotted line in Fig. 14) at a small damping force characteristic level.

Therefore, if the damping force is uniformly decreased in an attempt to reduce the waveform distortion, the damping force is reduced more than necessary even when very little waveform distortion occurs. This might cause a lack of the damping force and end up deteriorating the ride quality.

The present invention has been made in order to overcome the above defect, and an object thereof is to provide a damper control device that exerts appropriate damping force to improve the ride quality in a vehicle even when the vehicle gets over a projection on a road surface.

### Solutions to Problems

In order to achieve the above object, a damper control device according to the solutions to the problems of the present invention includes a correction unit that corrects damping force of a damper based on information from which a temporal variation amount of a damper velocity of the damper can be grasped and level information from which a damping force characteristic level that is the magnitude of a damping force characteristic of the damper can be grasped. Therefore, the damper control device can suppress occurrence of distortion in a characteristic of transmission damping force regardless of the magnitude of the damping force characteristic level. Since the damper control device corrects the damping force in accordance with the damping force characteristic level, the damper control device does not cause a lack of the damping force by reducing the damping force more than necessary when the damping force characteristic level is small.

### Brief Description of Drawings

Fig. 1 is a configuration diagram of a damper control device according to a first embodiment.
Fig. 2 is a schematic longitudinal cross-sectional diagram of a damper.
Fig. 3 is a diagram illustrating a damping force characteristic of the damper adjusted by a damping force adjusting unit.
Fig. 4 is an example of a map indicating the relation between a temporal variation amount and a correction gain.
Fig. 5 is a diagram illustrating the relation between a current command, an extension side lowest limit value, and a compression side lowest limit value.
Fig. 6 is a flowchart illustrating a processing procedure for correcting damping force in the damper control device according to the first embodiment.
Fig. 7 is a diagram illustrating an example of a characteristic of transmission damping force transmitted via a mount of the damper controlled at a maximum damping force level in the damper control device of the first embodiment.
Fig. 8 is a diagram illustrating an example of the characteristic of the transmission damping force transmitted via the mount of the damper controlled at a minimum damping force level in the damper control device of the first embodiment.
Fig. 9 is a first example of a map group prepared in accordance with level information and indicating the relation between the temporal variation amount and the correction gain.
Fig. 10 is a second example of the map group prepared in accordance with the level information and indicating the relation between the temporal variation amount and the correction gain.
Fig. 11 is a third example of the map group prepared in accordance with the level information and indicating the relation between the temporal variation amount and the correction gain.
Fig. 12 is a configuration diagram of a damper control device according to a second embodiment.
Fig. 13 is a diagram illustrating a time variation in the transmission damping force of the damper controlled in a conventional damper control device.
Fig. 14 is a diagram illustrating the characteristic of the transmission damping force of the damper controlled in the conventional damper control device so as to have the small damping force characteristic.
Fig. 15 is a diagram illustrating the characteristic of the transmission damping force of the damper controlled in the conventional damper control device so as to have the large damping force characteristic.

### Description of Embodiments

### <First Embodiment>

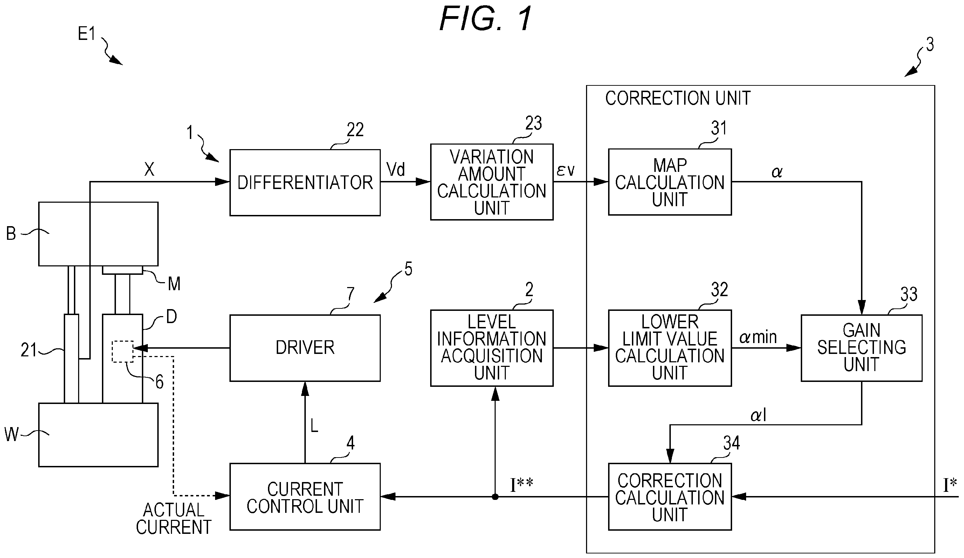

Hereinafter, the present invention will be described based on embodiments illustrated in the drawings. As illustrated in Fig. 1, a damper control device E1 according to a first embodiment is configured to control damping force in a damper D interposed between a sprung member B and an unsprung member W in a vehicle in this example. The damper control device E1 includes a variation amount acquisition unit 1, a level information acquisition unit 2, a correction unit 3, and a current control unit 4. The variation amount acquisition unit 1 acquires information from which a temporal variation amount εv of a damper velocity Vd of the damper D can be grasped, and obtains the temporal variation amount εv. The level information acquisition unit 2 acquires level information from which a damping force characteristic level that is the magnitude of a damping force characteristic of the damper D can be grasped. The correction unit 3 corrects the damping force of the damper D based on the temporal variation amount εv of the damper velocity Vd found in the variation amount acquisition unit 1 and the level information.

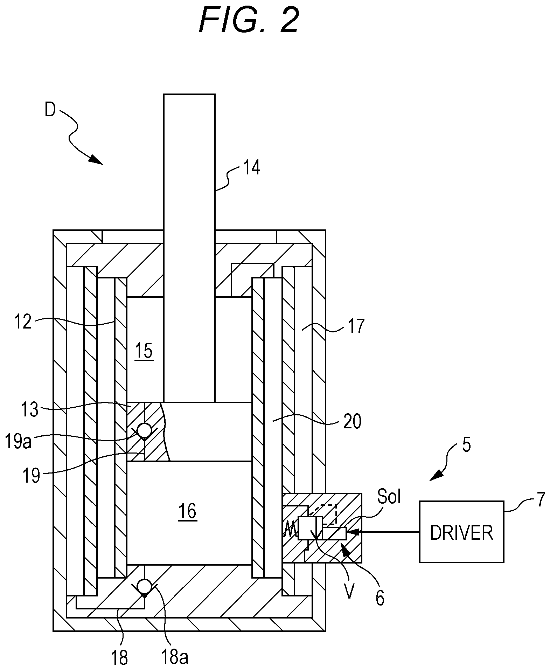

The respective units will be described below. As illustrated in Fig. 2, the damper D is configured to include, for example, a cylinder 12, a piston 13, a piston rod 14, an extension side chamber 15, a compression side chamber 16, a reservoir 17, a suction passage 18, a flow aligning passage 19, a damping passage 20, and a damping force adjusting unit 5. The piston 13 is slidably inserted into the cylinder 12. The piston rod 14 is movably inserted into the cylinder 12 and joined to the piston 13. The extension side chamber 15 and the compression side chamber 16 are defined within the cylinder 12 by the piston. The suction passage 18 includes a check valve 18a that allows only a flow of a fluid directed from the reservoir 17 to the compression side chamber 16. The flow aligning passage 19 includes a check valve 19a that allows only a flow of a fluid directed from the compression side chamber 16 to the extension side chamber 15. The damping passage 20 communicates with the extension side chamber 15 and the reservoir 17. The damping force adjusting unit 5 is provided in the damping passage 20 to give flow resistance of a fluid directed from the extension side chamber 15 to the reservoir 17. The damper D is configured as what is called a uniflow hydraulic damper, and interposed in parallel between the sprung member B and the unsprung member W in the vehicle via a mount M. When the damper D undergoes extension/contraction operation, the fluid is pushed out from the cylinder 12 to the reservoir 17 through the damping passage 20. The damper D then exerts the damping force for suppressing the extension/contraction operation by giving the resistance in the damping force adjusting unit 5 when the fluid filled in the cylinder 12 passes through the damping passage 20. The damper D is thus configured to suppress a relative movement of the sprung member B and the unsprung member W.

Water, an aqueous solution, and gas as well as hydraulic oil can be utilized as the fluid. In a case where the fluid is a liquid and the damper D is a single rod damper, the damper D includes the reservoir 17 in order to compensate for the volume of the piston rod 14 that moves in and out of the cylinder 12. In a case where the damper D is not the uniflow damper, a gas chamber, which is not illustrated, may be provided in the cylinder 12 so as to compensate for the volume of the piston rod 14 that moves in and out of the cylinder 12 by means of a variation in the capacity of the gas chamber. In this case, a passage communicating with the extension side chamber 15 and the compression side chamber 16 is provided in the piston 13, and the damping force adjusting unit 5 only needs to be provided in the middle of the passage.

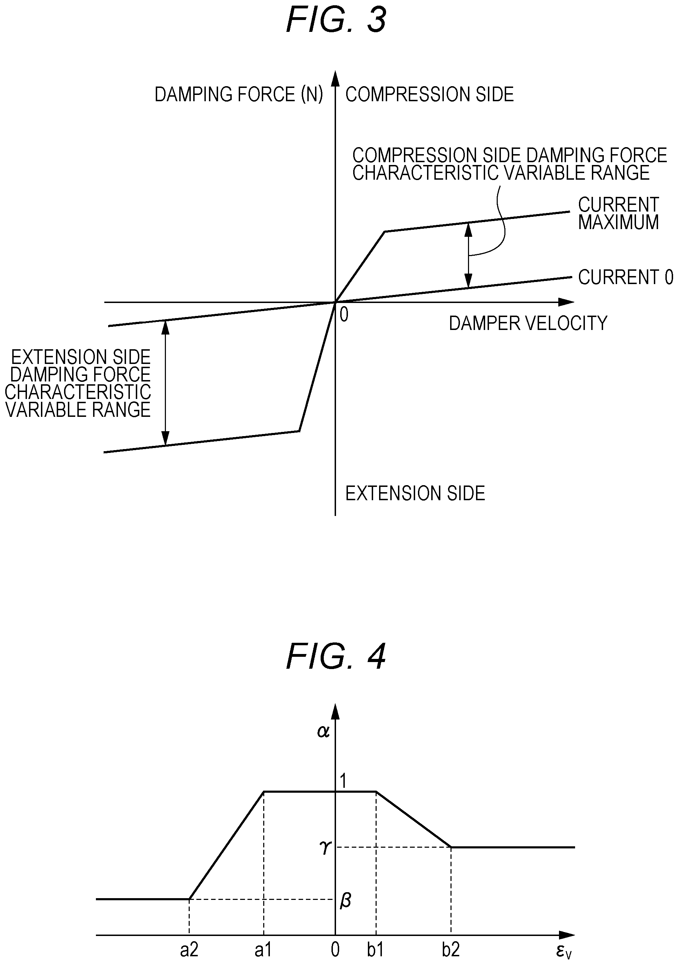

The damping force adjusting unit 5 is configured to include, for example, a solenoid valve 6 and a driver 7. The solenoid valve 6 includes a valve body V that makes a flow passage area of the damping passage 20 of the damper D variable and a solenoid Sol that drives the valve body V to adjust the flow passage area of the damping passage 20. The driver 7 supplies a voltage to the solenoid Sol in the solenoid valve 6. The driver 7 includes, for example, a PWM circuit, and is configured to be able to apply the voltage to the solenoid Sol at a duty ratio that depends on a voltage command in response to input of the voltage command, and control a current that flows through the solenoid Sol. When the damper control device E1 increases or decreases the current that flows through the solenoid Sol, the flow passage area of the damping passage 20 can be adjusted, and the damping force characteristic of the damper D can be adjusted to be large or small as illustrated in Fig. 3. More specifically, the damper control device E1 gives, to the driver 7, a current value to be given to the solenoid Sol as a voltage command L. The driver 7 then applies the voltage to a coil (not illustrated) of the solenoid Sol in order to give the current equal to the current value indicated by the damper control device E1. In this case, on the assumption that a stroke velocity of the damper D does not change, when a current amount given to the solenoid Sol in the damping force adjusting unit 5 is increased, the resistance given to the fluid that flows through the damping passage 20 increases, the damping force characteristic of the damper D increases, and the generated damping force also increases. With regard to the compression side damping force, when the damping force characteristic is increased, a damping force characteristic line is shifted to the upper side as illustrated in Fig. 3, and the damping force exerted by the damper D with respect to the damper velocity Vd increases. To the contrary, when the damping force characteristic is decreased, the damping force characteristic line is shifted to the lower side as illustrated in Fig. 3, and the damping force exerted by the damper D with respect to the damper velocity decreases. With regard to the extension side damping force, when the damping force characteristic is increased, the damping force characteristic line is shifted to the lower side as illustrated in Fig. 3, and the damping force exerted by the damper D with respect to the damper velocity Vd increases. To the contrary, when the damping force characteristic is decreased, the damping force characteristic line is shifted to the upper side as illustrated in Fig. 3, and the damping force exerted by the damper D with respect to the damper velocity decreases. Therefore, when the damping force characteristic is adjusted, the damping force exerted by the damper D can be adjusted to be large or small even at the same damper velocity of the damper D. In other words, the damping force adjusting unit 5 adjusts the damping force characteristic to adjust the damping force generated by the damper D.

The above-mentioned configuration of the damping force adjusting unit 5 is merely an example. For example, in a case where the extension side chamber 15, the compression side chamber 16, and the reservoir 17 of the damper D are filled with an electrorheological fluid or a magnetorheological fluid, a device capable of acting on an electric field or a magnetic field instead of the damping valve may be incorporated in the damping passage 20 to serve as the damping force adjusting unit 5. The damping force adjusting unit 5 may then adjust the magnitude of the electric field or the magnetic field by means of the current or the voltage given from the damper control device E1, vary the resistance given to the fluid that flows through the damping passage 20, and make the damping force generated by the damper D variable.

In the present embodiment, since the damping force adjusting unit 5 is configured to include the solenoid valve 6 to adjust the damping force by means of the current, the current control unit 4 is configured to detect an actual current that flows through the solenoid Sol, perform current feedback control, and control the damping force adjusting unit 5. More specifically, the current control unit 4 is configured to find, in response to input of a current command I** output by the correction unit 3, a deviation between the actual current that flows through the solenoid Sol of the solenoid valve 6 and the current command I**, and control the current that flows through the solenoid Sol by means of PI control or PID control based on the deviation. Therefore, the current control unit 4 outputs a final command voltage command L to the driver 7, and the driver 7 applies the voltage indicated by the voltage command L to the coil of the solenoid Sol, whereby the current to be supplied to the solenoid Sol is controlled.

The variation amount acquisition unit 1 is configured to detect the temporal variation amount εv of the damper velocity Vd in a predetermined cycle as illustrated in Fig. 1. The variation amount acquisition unit 1 includes a stroke sensor 21, a differentiator 22, and a variation amount calculation unit 23. The stroke sensor 21 detects damper displacement X that is a stroke of the damper D. The differentiator 22 calculates the damper velocity Vd of the damper D by differentiating the damper displacement X of the damper D detected in the stroke sensor 21. The variation amount calculation unit 23 finds the temporal variation amount εv of the damper velocity Vd by subtracting a damper velocity Vdpre detected one cycle before from the damper velocity Vd calculated in the differentiator 22 in the present cycle. The variation amount acquisition unit 1 inputs the detected temporal variation amount εv of the damper velocity Vd to the correction unit 3. In this description, a suspension velocity that is a relative velocity of the sprung member B and the unsprung member W is included in the concept of the damper velocity Vd. Since the mount M extends and contracts, the suspension velocity is typically the extension/contraction velocity of the whole of the damper D and the mount M. However, since a value of the suspension velocity is not significantly different from that of the damper velocity Vd, the suspension velocity may be considered as the damper velocity Vd in practice. Therefore, in order to obtain the temporal variation amount εv of the damper velocity Vd, a temporal variation amount of the suspension velocity obtained by differentiating suspension displacement may be employed as the temporal variation amount εv of the damper velocity Vd.

The level information acquisition unit 2 acquires the level information from which the damping force characteristic level that is the magnitude of the damping force characteristic of the damper D can be grasped. In the present embodiment, the damping force adjusting unit 5 includes the solenoid Sol, and the damping force characteristic of the damper D is controlled when the current that flows through the solenoid Sol is adjusted by the applied voltage. In this case, therefore, the level information acquisition unit 2 is configured to acquire the current command I** input to the current control unit 4 as the level information. Specifically, since the damping force characteristic of the damper D is controlled by the current that flows through the solenoid Sol, when the current command I** is acquired as a control command indicating the current that should flow through the solenoid Sol, the present degree of the damping force characteristic level of the damper D can be grasped. The level information may also be a current command I* serving as a control command input to the damper control device E1 in order to realize the damping force characteristic determined in a higher-level control device (not illustrated). Since the level information may also be a value of the actual current that actually flows through the solenoid Sol, the level information acquisition unit 2 may detect the actual current of the solenoid Sol using a current sensor and employ the actual current as the level information. Since the current control unit 4 monitors the actual current of the solenoid Sol in order to feed back the current and control the actual current, the level information acquisition unit 2 may acquire the value of the actual current from the current control unit **4.** Furthermore, since the level information only needs to enable the damping force characteristic level to be grasped, the level information may be the voltage command L serving as a control command output by the current control unit 4 to the driver 7, or may be an actual voltage supplied to the solenoid Sol. Alternatively, in a case where the control command generated for adjusting the damping force characteristic is not the current command but a voltage command, the level information may be the voltage command. The level information only needs to be information from which the condition of the damping force characteristic can be grasped, such as a position of a movable iron core that drives the valve body V of the solenoid Sol or a valve opening degree of the valve body V. In a case where the damper D uses the electrorheological fluid or the magnetorheological fluid as the working fluid, and the damping force adjusting unit 5 is the device capable of acting on the electric field or the magnetic field instead of the damping valve, the level information may be the control command such as the current command or the current command given to the device, or may be the actual current that flows through the device or the actual voltage applied to the device.

The correction unit 3 corrects the damping force of the damper D based on the temporal variation amount εv and the current command I** that is the level information. More specifically, in the present embodiment, the correction unit 3 holds the relation between the temporal variation amount εv and a correction gain α as a map in advance, and finds the correction gain α from the input temporal variation amount εv. Furthermore, the correction unit 3 finds a correction gain lower limit value αmin based on the current command I** input to the current control unit 4. The current command I** found at the last cycle timing can be sufficiently used as the current command I** required for performing the correction process in the present cycle. The correction unit 3 then compares the correction gain α and the correction gain lower limit value αmin, and employs a greater value as a final correction gain αl. Furthermore, the correction unit 3 is configured to multiply the current command I* input from the higher-level control device (not illustrated) by the correction gain αl to correct the damping force of the damper D. The current command I* that is the control command found in the higher-level control device may be generated by the damper control device E1.

More specifically, the correction unit 3 includes a map calculation unit 31, a lower limit value calculation unit 32, a gain selecting unit 33, and a correction calculation unit 34. The map calculation unit 31 finds the correction gain α from the temporal variation amount εv. The lower limit value calculation unit 32 finds the correction gain lower limit value αmin from the current command I** serving as the control command. The gain selecting unit 33 compares the correction gain α found in the map calculation unit 31 and the correction gain lower limit value αmin found in the lower limit value calculation unit 32, and employs the greater value as the correction gain αl. The correction calculation unit 34 corrects the current command I* by multiplying the current command I* input from the higher-level control device (not illustrated) by the correction gain αl, and finds the current command I** after the correction.

Assuming that the damping force in a direction of compressing the damper D is positive, and assuming that the compression side is positive and the extension side is negative, as illustrated in Fig. 4, the correction gain α has a value 1 in such a range that the temporal variation amount εv is equal to or more than a first extension side threshold value a1 that is a negative value and equal to or less than a first compression side threshold value b1 that is a positive value. In such a range that the temporal variation amount εv is less than the first extension side threshold value a1, the correction gain α is gradually reduced as the temporal variation amount εv decreases, and eventually has an extension side lowest limit value β when the temporal variation amount εv is equal to or less than a second extension side threshold value a2. In such a range that the temporal variation amount εv exceeds the first compression side threshold value b1, the correction gain α is gradually reduced as the temporal variation amount εv increases, and eventually has a compression side lowest limit value γ when the temporal variation amount εv is equal to or more than a second compression side threshold value b2. Therefore, when an absolute value of the temporal variation amount εv increases, the value of the correction gain α is reduced from 1, and eventually reaches the extension side lowest limit value β or the compression side lowest limit value γ. The compression side lowest limit value γ and the extension side lowest limit value β are set to values equal to or more than 0 and less than 1. This map is produced by mapping, in relation to the temporal variation amount εv, such a correction gain α that distortion does not occur in a characteristic of transmission damping force when the current command I* at the maximum damping force characteristic level is multiplied by the correction gain α and corrected. As can be understood from the map in Fig. 4, the value of the correction gain α varies from 1 to a smaller value when the absolute value of the temporal variation amount εv increases. Therefore, in such a range that the temporal variation amount εv is less than the first extension side threshold value a1 and such a range that the temporal variation amount εv exceeds the first compression side threshold value b1, when the current command I* is multiplied by the correction gain α, the current command I** after the correction is reduced to a value lower than the current command I* before the correction, and the damping force exerted by the damper D subjected to the correction is reduced with respect to the damping force exerted by the damper D without the correction. Although the correction unit 3 is configured to perform the map calculation, the value of the correction gain α may be determined by utilizing a function for finding the correction gain α from the temporal variation amount εv if the correction gain α does not complicatedly vary with respect to the temporal variation amount εv.

As described above, the correction unit 3 performs the correction to reduce the current command I* when the absolute value of the temporal variation amount εv of the damper velocity Vd increases. The damper velocity Vd has a positive value when the damper D contracts. The extension side lowest limit value β is the lowest limit value of the correction gain α at the time of the extension of the damper D. The compression side lowest limit value γ on the other side is the lowest limit value of the correction gain α at the time of the contraction of the damper D. The extension side lowest limit value β and the compression side lowest limit value γ can be freely determined as long as ride quality in the vehicle can be improved. The first extension side threshold value a1, the second extension side threshold value a2, the first compression side threshold value b1, and the second compression side threshold value b2 can also be freely determined in a similar manner.

A distortion amount of the characteristic of the transmission damping force at the time of the extension and the contraction of the damper controlled by a conventional damper control device will be described. As illustrated by a dashed-dotted line in Fig. 14, in the damper having the small damping force characteristic, it is ideal that the damping force reaches 0 when the damper velocity is 0, and the damping force is generated with respect to the damper velocity just in accordance with the damping force characteristic set by the damping force adjusting unit. To the contrary, as illustrated by a solid line in Fig. 14, the characteristic of the transmission damping force of the actual damper controlled by the conventional damper control device so as to have the small damping force characteristic does not pass through the origin of the graph but shifts in parallel with the ideal damping force characteristic with a temporal delay in the damping force variation during a compression side shift stroke in which an extension/contraction direction is switched from the extension to the contraction. After that, the characteristic of the transmission damping force shifts along the ideal damping force characteristic. As for the characteristic of the transmission damping force of the damper for which the conventional damper control device keeps the constant current command so as to achieve the small damping force characteristic, the amount of the characteristic of the transmission damping force distorted with respect to the ideal damping force characteristic is very small in the compression side shift stroke. Similarly, in the actual damper controlled by the conventional damper control device under the same condition, as illustrated by a broken line in Fig. 14, the characteristic of the transmission damping force thereof does not pass through the origin of the graph but shifts in parallel with the ideal damping force characteristic with a temporal delay in the damping force variation during an extension side shift stroke in which the extension/contraction direction is switched from the contraction to the extension. Then, the characteristic of the transmission damping force is vibrationally distorted with respect to the ideal damping force characteristic, and thereafter shifts along the ideal damping force characteristic. As for the characteristic of the transmission damping force of the damper for which the conventional damper control device keeps the constant current command so as to achieve the small damping force characteristic, the amount of the characteristic of the transmission damping force distorted with respect to the ideal damping force characteristic in the extension side shift stroke tends to be larger than that in the compression side shift stroke. It is also found from the characteristic of the transmission damping force in the compression side shift stroke and the extension side shift stroke that hysteresis occurs in the damping force characteristic since the characteristic of the transmission damping force does not pass through the origin of the graph in Fig. 14.

Similarly, as illustrated by a dashed-dotted line in Fig. 15, in the damper having the large damping force characteristic, it is ideal that the damping force reaches 0 when the damper velocity is 0, and the damping force is generated with respect to the damper velocity just in accordance with the damping force characteristic set by the damping force adjusting unit. To the contrary, as illustrated by a solid line in Fig. 15, the characteristic of the transmission damping force in the actual damper controlled by the conventional damper control device so as to have the large damping force characteristic does not pass through the origin of the graph but shifts in parallel with the ideal damping force characteristic with a temporal delay in the damping force variation during the compression side shift stroke in which the extension/contraction direction is switched from the extension to the contraction. Then, the characteristic of the transmission damping force is significantly distorted with respect to the ideal damping force characteristic, and thereafter shifts along the ideal damping force characteristic. As for the characteristic of the transmission damping force of the damper for which the conventional damper control device keeps the constant current command so as to achieve the large damping force characteristic, the distortion amount with respect to the ideal damping force characteristic in the compression side shift stroke is large as compared with the case where the damping force characteristic is small, and the timing at which the distortion occurs is also temporally delayed as compared with the case where the damping force characteristic is small. Similarly, as illustrated by a broken line in Fig. 15, the characteristic of the transmission damping force of the actual damper controlled by the conventional damper control device under the same condition does not pass through the origin of the graph but shifts in parallel with the ideal damping force characteristic with a temporal delay in the damping force variation during the extension side shift stroke in which the extension/contraction direction is switched from the contraction to the extension. Then, the characteristic of the transmission damping force is vibrationally distorted with respect to the ideal damping force characteristic, and thereafter shifts along the ideal damping force characteristic. In the damper for which the conventional damper control device maintains the constant current command so as to achieve the large damping force characteristic, similarly, the amount of the characteristic of the transmission damping force distorted with respect to the ideal damping force characteristic in the extension side shift stroke is large as compared with the case where the damping force characteristic is small, and the timing at which the distortion occurs is also temporally delayed as compared with the case where the damping force characteristic is small. It is also found from the characteristic of the transmission damping force in the compression side shift stroke and the extension side shift stroke that hysteresis occurs in the damping force characteristic since the characteristic of the transmission damping force does not pass through the origin of the graph in Fig. 15.

Thus, as described above, the distortion amount in the compression side shift stroke of the damper D is different from that in the extension side shift stroke, and the distortion amount at the time of the extension side shift stroke tends to be larger than that at the time of the compression side shift stroke. It can also be understood that in a case where the damping force characteristic is large, as compared with the case where the damping force characteristic is small, the amount of the characteristic of the transmission damping force of the damper D distorted with respect to the ideal damping force characteristic tends to be large, and the timing at which the distortion occurs tends to be temporally delayed. It is also found that the distortion of the characteristic of the transmission damping force occurs immediately after the extension/contraction direction of the damper is switched.

Therefore, with regard to the map of the correction gain α for suppressing the distortion of the damping force characteristic when the damping force characteristic is the maximum, the shape of the map in the compression side shift stroke is different from that in the extension side shift stroke. More specifically, since the distortion amount in the compression side shift stroke is smaller than that in the extension side shift stroke, the compression side lowest limit value γ is greater than the extension side lowest limit value β. In the compression side shift stroke, since the timing at which the distortion occurs is earlier than that at the time of the extension side shift stroke, the value of the first compression side threshold value b1 is set to a value smaller than an absolute value of the first extension side threshold value a1, and the value of the second compression side threshold value b2 is similarly set to a value smaller than an absolute value of the second extension side threshold value a2. Consequently, when the current command I* is corrected using the correction gain α in the compression side shift stroke, the correction for reducing the damping force is performed at the timing earlier than that in the extension side shift stroke, and a reduction amount, i.e. a correction amount, is smaller than that at the time of the extension side shift stroke since the distortion amount is small. Thus, the first extension side threshold value a1 is the value for determining such a range that the damping force is not corrected in the extension side shift stroke, and the second extension side threshold value a2 is used for defining such a range that the reduction amount for the damping force is not increased any more with respect to the increase in the absolute value of the temporal variation amount εv in the extension side shift stroke. Similarly, the first compression side threshold value b1 is the value for determining such a range that the damping force is not corrected in the compression side shift stroke, and the second compression side threshold value b2 is used for defining such a range that the reduction amount for the damping force is not increased any more with respect to the increase in the absolute value of the temporal variation amount εv in the compression side shift stroke.

Since the temporal variation amount εv is the amount corresponding to an acceleration rate obtained by differentiating the damper velocity Vd, a phase of the temporal variation amount εv is advanced 90 degrees from a phase of the damper velocity Vd. Therefore, in a case where the temporal variation amount εv has a positive value, it is indicated that the damper D is in the compression side shift stroke and switches from the extension to the contraction. To the contrary, in a case where the temporal variation amount εv has a negative value, it is indicated that the damper D is in the extension side shift stroke and switches from the contraction to the extension. Thus, whether the damper D is in the compression side shift stroke or in the extension side shift stroke can be determined using the sign of the temporal variation amount εv. By producing the map of the correction gain α using the temporal variation amount εv as a parameter, or by finding the correction gain α using the temporal variation amount εv as a parameter, the appropriate correction gain α can be obtained without performing the determination as to whether the damper D is in the compression side shift stroke or in the extension side shift stroke.

The correction gain α is such a gain that the characteristic of the transmission damping force exerted by the current command I** after the correction is not distorted with respect to the ideal damping force characteristic when the damping force characteristic of the damper D is the maximum. As mentioned above, however, the distortion amount varies in accordance with the magnitude of the damping force characteristic. Therefore, in a case where the current command I* is corrected using only the correction gain α, the ride quality in the vehicle might be deteriorated due to an excessive reduction amount for the damping force. In this regard, in order not only to find the correction gain α but also to adjust the correction gain in accordance with the magnitude of the damping force characteristic, the present embodiment includes the lower limit value calculation unit 32 that finds the correction gain lower limit value αmin from the current command I** serving as the control command.

The lower limit value calculation unit 23 finds the correction gain lower limit value αmin in accordance with the value of the current command I**. The value of the current command I** is proportional to the damping force characteristic, and the distortion amount increases in proportion to the damping force characteristic. Therefore, the greater the value of the current command I** is, the more significantly the value of the current command I** after the correction needs to be reduced. The correction gain lower limit value αmin is the gain by which the current command I* is multiplied. Therefore, the greater the value of the current command I** is, the smaller the correction gain lower limit value αmin is. In this case, the correction gain lower limit value αmin represents a lower limit value below which an unnecessary reduction in the damping force is caused in an attempt to appropriately suppress the distortion of the characteristic of the transmission damping force at the damping force characteristic level designated by the current command I** both in the compression side shift stroke and in the extension side shift stroke.

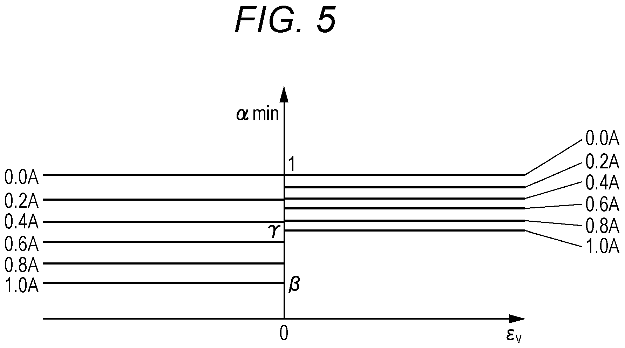

More specifically, as illustrated in Fig. 5, in a case where the current value indicated by the current command I** varies, for example, in the range of 0.0 A to 1.0 A, the correction gain lower limit values αmin are set in each of the compression side shift stroke and the extension side shift stroke at intervals of 0.2 A. Since the distortion amount in the compression side shift stroke is smaller than that in the extension side shift stroke, the correction gain lower limit value αmin in the compression side shift stroke is greater than the correction gain lower limit value αmin in the extension side shift stroke. For example, in a case where the current command I indicates 0.7 A in the extension side shift stroke, the lower limit value calculation unit 32 computes the value of the correction gain lower limit value αmin by means of linear interpolation that utilizes both sides of 0.7 A in which the correction gain lower limit values αmin in the extension side shift stroke are set, i.e. the value of the correction gain lower limit value αmin corresponding to 0.6 A and the value of the correction gain lower limit value αmin corresponding to 0.8 A. In this case, the lower limit value calculation unit 32 can grasp the stroke of the damper D as the extension side shift stroke using the sign of the temporal variation amount εv. Therefore, the lower limit value calculation unit 32 only needs to refer to the correction gain lower limit values αmin set in a region in which the temporal variation amount εv has a negative value, that is, a region on the left side of the vertical axis in Fig. 5, and find the correction gain lower limit value αmin required for this stroke by means of the selection or the linear interpolation based on the current command I**. The correction gain lower limit value αmin in the compression side shift stroke is equal to the compression side lowest limit value γ when the current command I** is the maximum, and the correction gain lower limit value αmin in the extension side shift stroke is equal to the extension side lowest limit value β when the current command I** is the maximum.

The gain selecting unit 33 compares the correction gain α found in the map calculation unit 31 and the correction gain lower limit value αmin found in the lower limit value calculation unit 32, and employs the greater value as the correction gain αl. Since the map for finding the correction gain α is optimized when the current command I** is the maximum and the damping force characteristic is the maximum, the correction gain α found by utilizing this map has a value smaller than the correction gain lower limit value αmin. Since the correction gain lower limit value αmin found from the current command I* is the minimum value that can be obtained at the current command I**, the gain selecting unit 33 compares the correction gain α and the correction gain lower limit value αmin, and employs the gain having the greater value as the final correction gain αl.

The correction calculation unit 34 multiplies the correction gain αl output by the gain selecting unit 33 by the current command I* to correct the current command I* and output the current command I**. Therefore, when the absolute value of the temporal variation amount εv of the damper velocity Vd increases, the correction unit 3 performs the correction by increasing the reduction amount for the current command value I*. When the current command I that is the control command increases, that is, when the damping force characteristic level increases, the correction unit 3 performs the correction by increasing the reduction amount for the current command I*.

The current command I** corrected by the correction unit 3 in this manner is input to the current control unit 4. In response to the input of the current command I**, the current control unit 4 outputs the final voltage command L as the control command to the driver 7 in the damping force adjusting unit 5. The driver 7 then supplies the voltage to the damping force adjusting unit 5 in accordance with the voltage command L, and the damping force of the damper D is controlled. In this example, since a damping coefficient of the damper D is adjusted by the damping force adjusting unit 5 in accordance with the current amount that flows through the solenoid Sol, the voltage command L is input to the driver 7 as the control command to be given to the damping force adjusting unit 5. The driver 7 includes, for example, the PWM circuit or the like, and is configured to apply the voltage corresponding to the voltage command L to the solenoid Sol in response to the input of the voltage command L. The damping force adjusting unit 5 in the damper D adjusts the damping coefficient of the damper D in response to the supply of the voltage from the driver 7.

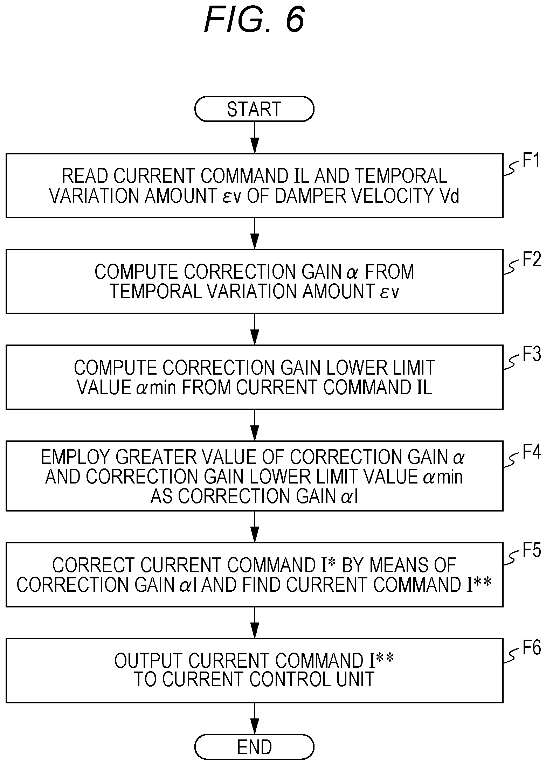

The process ranging from the correction in the correction unit 3 to the command output to the driver 7 is performed, for example, in a procedure illustrated by a flowchart in Fig. 6. First, the correction unit 3 reads the current command I** and the temporal variation amount εv of the damper velocity Vd (step F1). Next, as described by using Fig. 4, the correction unit 3 computes the correction gain α from the temporal variation amount εv by means of the map calculation (step F2). Furthermore, as described by using Fig. 5, the correction unit 3 computes the correction gain lower limit value αmin from the current command I** (step F3). The correction unit 3 then employs the greater value of the correction gain α and the correction gain lower limit value αmin as the correction gain αl (step F4). The correction unit 3 performs the correction by multiplying the correction gain αl and the current command I* together, and obtains the current command I** (step F5). Finally, the correction unit 3 outputs the current command I** to the current control unit 4 (step F6). The damper control device E1 continuously performs the above-mentioned series of processes, thereby correcting the current command I* and outputting the current command I** to control the damper D.

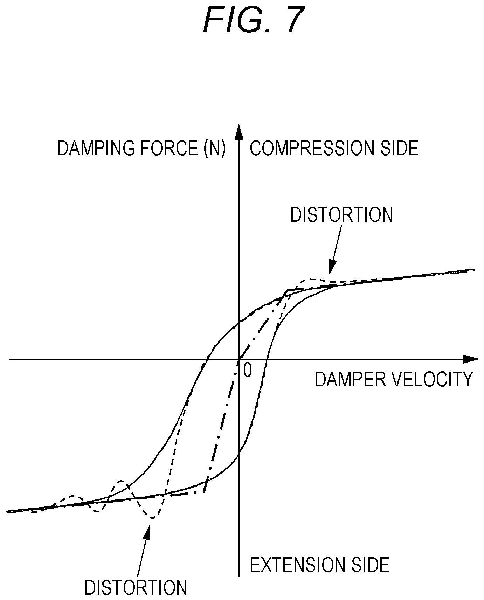

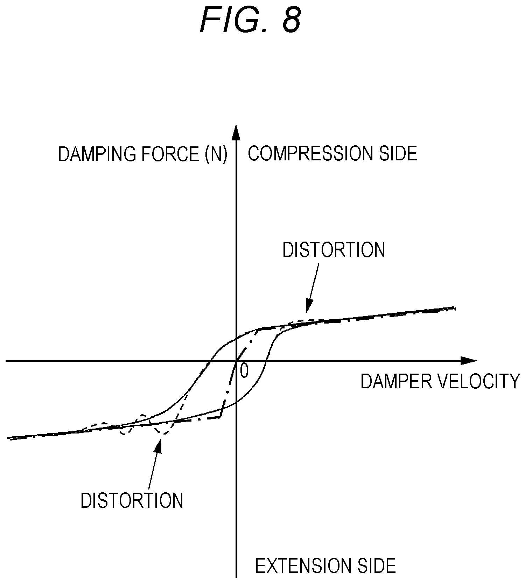

Meanwhile, a case where the vehicle gets over a projection on a road surface is considered. In such a situation, the damper D is rapidly compressed when the vehicle gets on the projection, and the damper D is rapidly extended when the vehicle gets over the projection. The temporal variation amount εv of the damper velocity Vd increases when the vehicle gets over the projection. In the conventional damper control device, when the damper D has the maximum damping force characteristic level, with respect to the ideal damping force characteristic (dashed-dotted line in Fig. 7), the distortion occurs in the characteristic of the force (transmission damping force), i.e. the damping force generated by the damper D and transmitted to the sprung member B via the mount M, as illustrated by broken lines in Fig. 7, and a point at which the damping force changes rapidly appears. Moreover, in the conventional damper control device, when the damper D has the minimum damping force characteristic level, the characteristic of the force (transmission damping force), i.e. the damping force generated by the damper D and transmitted to the sprung member B via the mount M, is slightly distorted with respect to the ideal damping force characteristic (dashed-dotted line in Fig. 8) as illustrated by broken lines in Fig. 8, and a point at which the damping force changes rapidly appears.

In this regard, the damper control device E1 of the present invention performs the correction to reduce the damping force of the damper D based on the temporal variation amount εv of the damper velocity Vd and the damping force characteristic level. Consequently, at the part where the distortion conventionally occurs in the transmission damping force with respect to the ideal damping force characteristic, the damper control device E1 can suppress the occurrence of the distortion of the characteristic of the transmission damping force regardless of the magnitude of the damping force characteristic level as illustrated by solid lines in Fig. 7 and solid lines in Fig. 8. Since the reduction amount for the damping force is adjusted in accordance with the damping force characteristic level, the damper control device E1 does not cause a lack of the damping force by reducing the damping force more than necessary when the damping force characteristic level is small. Therefore, the ride quality in the vehicle can be improved regardless of the magnitude of the damping force characteristic level. Thus, according to the damper control device E1 of the present invention, the ride quality in the vehicle can be improved even when the vehicle gets over the projection on the road surface.

In this case, when the temporal variation amount εv is less than the first extension side threshold value a1, the correction gain α is gradually reduced as the absolute value of the temporal variation amount εv increases. When the temporal variation amount εv exceeds the first compression side threshold value b1, the correction gain α is gradually reduced as the absolute value of the temporal variation amount εv increases. Since the correction gain αl gradually decreases in this manner, a rapid change in the current command I** is relieved at the time of the correction, and the steep damping force of the damper D can be suppressed. As illustrated in Figs. 7 and 8, the timing at which the distortion occurs in the characteristic of the transmission damping force in the compression side shift stroke with respect to the ideal damping force characteristic is earlier than the timing at which the distortion occurs in the characteristic of the transmission damping force in the extension side shift stroke with respect to the ideal damping force characteristic. In this regard, in the damper control device E1 of the first embodiment, the value of the first compression side threshold value b1 is set to the value smaller than the absolute value of the first extension side threshold value a1. Therefore, the current command I* can be corrected in accordance with the timing at which the distortion occurs in each of the compression side shift stroke and the extension side shift stroke. In other words, the damping force of the damper D can be corrected in accordance with the timing at which the distortion occurs in each of the compression side shift stroke and the extension side shift stroke. Therefore, the damper control device E1 of the first embodiment can improve the ride quality in the vehicle both in the compression side shift stroke and in the extension side shift stroke. In addition, depending on the structure of the damper D, the valve that causes the distortion of the transmission damping force at the time of the extension is different from that at the time of the contraction. Therefore, since a difference in the shape of the distortion of the characteristic of the transmission damping force between the extension and the contraction depends on the structure of the damper D, the first compression side threshold value b1 and the first extension side threshold value a1 are not limited to the above-mentioned setting and can be designed so as to be suitable for the damper D.

In the damper control device E1, the greater the absolute value of the temporal variation amount εv of the damper velocity Vd and the damping force characteristic level grasped from the level information are, the more significantly the correction unit 3 performs the correction to increase the reduction amount for the damping force of the damper D. The greater the damping force characteristic level is, or the greater the absolute value of the temporal variation amount of the damper velocity is, the more likely the distortion is to occur in the characteristic of the transmission damping force. Therefore, the above-mentioned setting enables the damper control device E1 to effectively suppress the distortion of the characteristic of the transmission damping force and to reduce a rapid change in the damping force regardless of the vehicle running condition.

As described above, the damping force of the damper D is corrected by multiplying the current command I* serving as the control command to be given to the current control unit 4 by the correction gain αl found from the temporal variation amount εv of the damper velocity Vd. Therefore, the control command can be corrected simply by means of the multiplication of the correction gain αl, and the correction calculation is facilitated. The correction unit 3 is configured to correct the damping force of the damper D by multiplying, by the correction gain αl, the control command to be given to the damping force adjusting unit 5, namely, in this example, the current command I* that is the control command generated in the course of generating the voltage command L. Alternatively, the damping force of the damper D may be corrected by multiplying, by the correction gain, a control command to be given to the damping force adjusting unit 5 or a control command generated in the course of generating this control command in addition to the current command I*.

In a case where the level information is the control command for the current control unit 4 or the damping force characteristic level generated by the damper D in accordance with the control command, the magnitude of the damping force can be easily estimated, and the conversion into the damping force characteristic level is not required. Therefore, the level information can be used in the correction process for the damping force of the damper D as it is, and the correction process for the damping force is simplified.

In the present embodiment, the current command I** input to the current control unit 4 is acquired as the level information. Since the current control unit 4 performs the current feedback control on the damping force adjusting unit 5, the current that flows through the solenoid Sol of the damping force adjusting unit 5 follows the current command I** with a high degree of accuracy. Therefore, when the current command I** is used as the level information, the actual damping force characteristic level can be grasped with a high degree of accuracy, and the damping force can be appropriately corrected. Consequently, the distortion that occurs in the characteristic of the transmission damping force can be reduced with a high degree of accuracy. This advantage can also be achieved by using the actual current that actually flows through the solenoid Sol of the damping force adjusting unit 5 as the level information.

The correction unit 3 is configured to find the correction gain α found from the temporal variation amount εv and the correction gain lower limit value αmin found from the current command I** serving as the level information, and employ the greater value of the correction gain α and the correction gain lower limit value αmin as the correction gain αl. Meanwhile, it is also possible to prepare a plurality of maps for finding the correction gain α by means of the current command I**, select a map in accordance with the current command I**, and find the correction gain αl based on the selected map and the temporal variation amount εv. As compared with the step of preparing the plurality of maps, selecting a map based on the current command I**, and finding the correction gain αl, the step of finding the correction gain α by means of the single map, finding the correction gain lower limit value αmin from the current command I**, and selecting one of the two to find the correction gain αl is advantageous in simplifying a program for executing the process of the correction unit 3 of the damper control device E1.

As mentioned above, the correction unit 3 is configured to find the correction gain α found from the temporal variation amount εv of the damper velocity Vd and the correction gain lower limit value αmin found from the current command I**, and employ one of the two having the greater value as the final correction gain αl. Alternatively, it is also possible to prepare a plurality of maps for finding the correction gain α in accordance with several damping force characteristic levels, select a map with reference to the level information, and find the correction gain αl based on the selected map and the temporal variation amount εv.

Therefore, the correction unit 3 only needs to find the correction gain αl in the map calculation unit 31 and multiply the current command I* by the correction gain αl in the correction calculation unit 34 to correct the current command I*. Accordingly, the lower limit value calculation unit 32 and the gain selecting unit 33 can be eliminated.

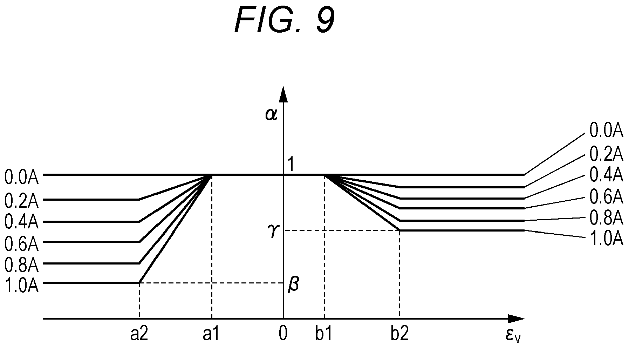

More specifically, as illustrated in Fig. 9, for example, the plurality of maps for finding the correction gain αl from the temporal variation amount εv is prepared in accordance with several current commands I**. A map group in a first example illustrated in Fig. 9 includes the plurality of maps. Specifically, the first extension side threshold value a1, the second extension side threshold value a2, the first compression side threshold value b1, and the second compression side threshold value b2 are set to predetermined values in advance. The extension side lowest limit value β, the compression side lowest limit value γ, the slope of the correction gain in such a range that the temporal variation amount εv is equal to or more than the second extension side threshold value a2 and less than the first extension side threshold value a1, and the slope of the correction gain in such a range that the temporal variation amount εv exceeds the first compression side threshold value b1 and is equal to or less than the second compression side threshold value b2 vary in accordance with the current command I**. For example, in a case where the current value indicated by the current command I** varies, for example, in the range of 0.0 A to 1.0 A, the maps for finding the correction gains αl are prepared in each of the compression side shift stroke and the extension side shift stroke at intervals of 0.2 A.

In order to find the correction gain αl, in a case where the map corresponding to the current command I** input to the map calculation unit 31 is prepared in advance, the correction gain αl can be found simply by selecting the corresponding map and performing the map calculation with the use of the selected map and the temporal variation amount εv of the damper velocity Vd. In a case where the map corresponding to the current command I** input to the map calculation unit 31 does not exist, for example, in a case where the current command I** indicates 0.7 A in the extension side shift stroke, the map calculation unit 31 only needs to find the correction gain αl corresponding to the current command I** by utilizing both sides of 0.7 A in which the maps in the extension side shift stroke are set, i.e. the map corresponding to 0.6 A and the map corresponding to 0.8 A, finding two correction gains αl from the respective maps, and performing the linear interpolation on these correction gains αl.

When the correction gain αl is found using the maps illustrated in Fig. 9, in a case where the damping force characteristic is low and the reduction amount for the damping force can be small, the slope of the correction gain in such a range that the temporal variation amount εv is equal to or more than the second extension side threshold value a2 and less than the first extension side threshold value a1 and the slope of the correction gain in such a range that the temporal variation amount εv exceeds the first compression side threshold value b1 and is equal to or less than the second compression side threshold value b2 are gradual as compared with the case where the correction gain αl is found by finding the correction gain α and the correction gain lower limit value αmin as mentioned above. Therefore, the variation in the current command I** after the correction becomes gradual, and the damping force variation in the damper D becomes gradual, whereby the ride quality in the vehicle can be improved more effectively.

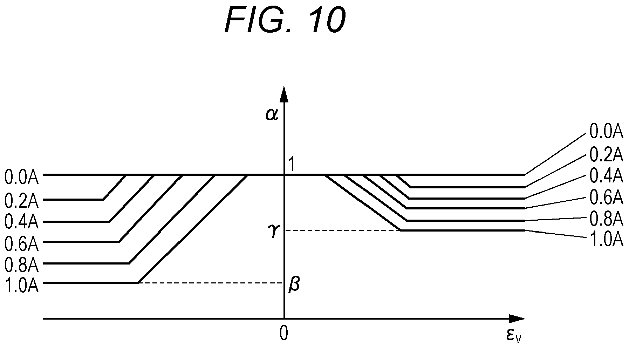

As in a second example illustrated in Fig. 10, the map group may be configured in such a manner that the first extension side threshold value a1, the second extension side threshold value a2, the first compression side threshold value b1, and the second compression side threshold value b2 also vary in accordance with the level information. In the map group illustrated in Fig. 10, since the distortion is less likely to occur when the current command I** that is the level information is small as mentioned above, the smaller the current command I* is, the more significantly the first extension side threshold value a1 is varied to shift to the negative side, and the more significantly the first compression side threshold value b1 is varied to shift to the positive side. The smaller the current command I** is, the smaller the reduction amount for the damping force may be. Therefore, the smaller the current command I** is, the closer the extension side lowest limit value β and the compression side lowest limit value γ are to 1. The smaller the current command I** is, the closer the extension side lowest limit value β and the compression side lowest limit value γ are to 1, the more significantly the first extension side threshold value a1 is varied to shift to the negative side, and the more significantly the first compression side threshold value b1 is varied to shift to the positive side. Therefore, the second extension side threshold value a2 accordingly shifts in the same direction as the first extension side threshold value a1, and the first compression side threshold value b2 accordingly shifts in the same direction as the first compression side threshold value b1.

The correction gain αl is found using this map group in the same way as when the correction gain αl is obtained from the map group of the first example in Fig. 9. Specifically, the plurality of maps corresponding to the several current commands I** is prepared in advance to constitute the map group. In a case where the map corresponding to the input current command I** exists, the map calculation unit 31 only needs to select the map to find the correction gain αl. In a case where such a map does not exist, the map calculation unit 31 only needs to select two maps corresponding to the current commands having the values close to the current command I** and find the correction gain αl by means of the linear interpolation.

In the map illustrated in Fig. 10, the smaller the current command I** is, the more significantly the first extension side threshold value a1 is varied to shift to the negative side in real time, and the more significantly the first compression side threshold value b1 is varied to shift to the positive side in real time. Therefore, the damping force does not have to be unnecessarily reduced when the reduction in the damping force is not required. Thus, when the damper control device E1 finds the correction gain αl by utilizing the maps illustrated in Fig. 10, both the avoidance of the distortion of the characteristic of the transmission damping force and the avoidance of the lack of the damping force can be sophisticatedly achieved, and the ride quality in the vehicle can be improved more effectively. The adjustment range of the correction gain αl can also be expanded.

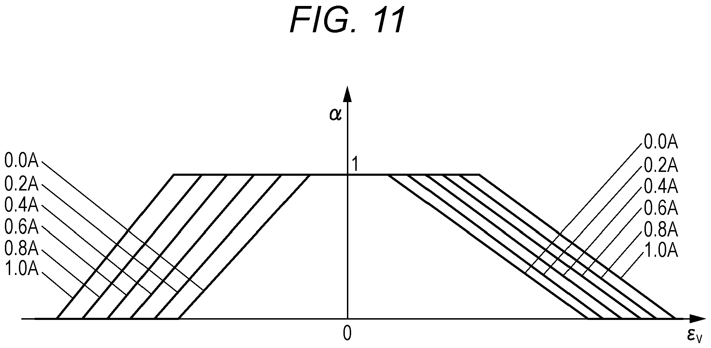

As in a third example illustrated in Fig. 11, the map group may be configured in such a manner that the first extension side threshold value a1 and the first compression side threshold value b1 vary so as to shift in parallel with the temporal variation amount axis in accordance with the level information. In the map group illustrated in Fig. 11, since the distortion of the characteristic of the transmission damping force is less likely to occur when the current command I** that is the level information is small as mentioned above, the smaller the current command I** is, the more significantly the first extension side threshold value a1 is varied to shift to the negative side, and the more significantly the first compression side threshold value b1 is varied to shift to the positive side. In this map group, the extension side lowest limit value β and the compression side lowest limit value γ are not provided, and the minimum value of the correction gain αl is 0. The slope of the correction gain that decreases to 0 when the temporal variation amount εv is less than the first extension side threshold value a1 does not vary in accordance with the current command I** but is kept constant, and only the first extension side threshold value a1 shifts in the extension side shift stroke. In the same way, in the compression side shift stroke, the slope of the correction gain that decreases to 0 when the temporal variation amount εv exceeds the first compression side threshold value b1 does not vary in accordance with the current command I** but is kept constant, and only the first compression side threshold value b1 shifts.

The correction gain αl is found using this map group in the same way as when the correction gain αl is obtained from the map group of the first example in Fig. 9. Again, the plurality of maps corresponding to the several current commands I** is prepared in advance to constitute the map group. In a case where the map corresponding to the input current command I** exists, the map calculation unit 31 only needs to select the map to find the correction gain αl. In a case where such a map does not exist, the map calculation unit 31 only needs to select two maps corresponding to the current commands having the values close to the current command I** and find the correction gain αl by means of the linear interpolation.

In the maps illustrated in Fig. 11, the smaller the current command I** is, the more significantly the first extension side threshold value a1 is varied to shift to the negative side in real time, and the more significantly the first compression side threshold value b1 is varied to shift to the positive side in real time. Therefore, the damping force does not have to be unnecessarily reduced when the reduction in the damping force is not required. Therefore, when the damper control device E1 finds the correction gain αl by utilizing the maps illustrated in Fig. 11, both the avoidance of the occurrence of the distortion and the avoidance of the lack of the damping force can be sophisticatedly achieved, and the ride quality in the vehicle can be improved more effectively.

As mentioned above, the advantage of the use of the map groups illustrated in Figs. 9 to 11 is that the first extension side threshold value a1, the second extension side threshold value a2, the first compression side threshold value b1, the second compression side threshold value b2, the extension side lowest limit value β, and the compression side lowest limit value γ can be varied in real time in accordance with the level information to sophisticatedly realize both the reduction in the distortion and the avoidance of the lack of the damping force, and that a damping force changing algorithm can be simplified. However, the map groups illustrated in Figs. 9 to 11 are merely examples. The map group is not limited to these examples, and the design of the map group can be changed so as to be appropriate for the vehicle.

In the above-mentioned description, the correction gain αl is found from the map. Alternatively, a plurality of functions for finding the correction gain αl from the time variation amount εv may be prepared in accordance with the level information, a function may be selected in accordance with the level information, and the correction gain αl may be found using the selected function. Furthermore, the correction unit 3 is configured to find the correction gain αl to perform the correction by multiplying the correction gain αl by the current command I*. Alternatively, not the correction gain αl but the reduction amount to be subtracted from the current command I** may be found, and the current command I** may be found by subtracting the reduction amount from the current command I*. This configuration can be achieved, for example, simply by mapping the temporal variation amount εv and the reduction amount to find the reduction amount, and holding the map group including the plurality of maps in accordance with the level information.

Furthermore, since the damping force of the damper D is corrected based on the temporal variation amount εv of the damper velocity Vd in the damper control device E1 of the present invention, the ride quality in the vehicle is improved in accordance with the steep variation in the damper velocity Vd that occurs when the vehicle gets over the projection on the road surface. Moreover, the steep variation in the damping force of the damper D at the time of the switch of the extension and the compression of the damper D can be relieved.

In the above description, the variation amount acquisition unit 1 finds the difference between the damper velocity Vdpre obtained in the last cycle and the damper velocity Vd obtained in the present cycle, and employs the difference as the temporal variation amount εv of the damper velocity Vd. Alternatively, the temporal variation amount εv of the damper velocity Vd may be obtained by differentiating the damper velocity Vd. Furthermore, the damper D is interposed between the sprung member B and the unsprung member W of the vehicle, and the sprung member B is not restrained except by the damper D and a suspension spring arranged in parallel with the damper D. When the unsprung member W intensively vibrates, the amplitude of the vibration of the unsprung member W is small, and force of the suspension spring that transmits the vibration of the unsprung member W to the sprung member B is small. Therefore, the transmission of the vibration to the sprung member B is caused mostly by the damping force of the damper D, and force that acts on the sprung member B is substantially equal to the damping force generated by the damper D. Since the damper D generates the damping force in accordance with the damper velocity Vd, the damper velocity Vd of the damper D can be obtained when a vertical acceleration rate of the sprung member B is obtained, and the temporal variation amount εv of the damper velocity Vd can be found. Specifically, in this case, force obtained by multiplying the sprung mass of each wheel of the vehicle by the sprung acceleration rate that is the vertical acceleration rate of the sprung member B is substantially equal to the damping force, and the damping force is substantially proportional to the damper velocity Vd of the damper D. Therefore, when the relation between the damping force of the damper D and the damper velocity Vd and the sprung mass of each wheel are known in advance, the damper velocity Vd can be obtained from the sprung acceleration rate, and the temporal variation amount εv of the damper velocity Vd can be calculated simply from the obtained damper velocity Vd. When the unsprung member W intensively vibrates, the resonance frequency of the sprung member B is lower than the resonance frequency of the unsprung member W, and an influence of the vibration of the sprung member B on the damper velocity Vd is small. Therefore, the vertical velocity of the unsprung member W is substantially equal to the damper velocity Vd. Thus, the vertical velocity of the unsprung member W is obtained by integrating the unsprung acceleration rate that is the vertical acceleration rate of the unsprung member W, and the temporal variation amount εv of the damper velocity Vd can be obtained by utilizing the vertical velocity of the unsprung member W. The vertical acceleration rate of the unsprung member W corresponds to a value obtained by differentiating the vertical velocity of the unsprung member W and corresponds to the temporal variation amount of the vertical velocity of the unsprung member W. Therefore, the vertical acceleration rate of the unsprung member W can be used as the temporal variation amount εv of the damper velocity Vd as it is. In other words, the temporal variation amount εv of the damper velocity Vd can be obtained based on the vertical acceleration rate of the unsprung member W. Thus, the information that is acquired in the variation amount acquisition unit 1 in order to grasp the temporal variation amount εv of the damper velocity Vd may be the vertical acceleration rate of the sprung member B or the unsprung member W as well as the damper velocity Vd itself. In a case where the vertical acceleration rate of the sprung member B or the unsprung member W is acquired as the information, an easily installable acceleration sensor is used, and the stroke sensor which requires a higher installation cost than the acceleration sensor can be eliminated.

In the damper control device E1 of the present invention, since the current command I* to be input to the current control unit 4 is corrected, the control is simplified as compared with the case where the correction is performed in the course of generating the current command I*.

Furthermore, the damper D is set as the uniflow damper, includes the damping force adjusting unit 5 that drives the valve body by means of the solenoid Sol provided in the damping passage 20 leading from the cylinder 12 to the reservoir 17, and includes the check valves 18a and 19a in the suction passage 18 and the flow aligning passage 19, respectively. In this damper D, either the check valve 18a or the check valve 19a needs to open in the extension stroke and the contraction stroke, and a delay in an opening response occurs. However, when the damper D is used in conjunction with the damper control device E1 of the present invention, the distortion of the characteristic of the transmission damping force of the damper D can be rectified, and the distortion can be effectively canceled. Therefore, the damper control device E1 is most suitable in particular for the damper D of the present embodiment set as the uniflow damper, including the damping force adjusting unit 5 that drives the valve body by means of the solenoid Sol provided in the damping passage 20 leading from the cylinder 12 to the reservoir 17, and including the check valves 18a and 19a in the suction passage 18 and the flow aligning passage 19, respectively.

The damper control device E1 of the present invention can be applied to not only the damper D including the damping force adjusting unit 5 that drives the valve body by means of the solenoid Sol but also the damper D that drives the valve body by means of an actuator other than the solenoid and the damper D in which the electrorheological fluid or the magnetorheological fluid is utilized. Furthermore, in the above description, the current command I* is corrected since the solenoid Sol is used in the damping force adjusting unit 5. Alternatively, in a case where the control command value is given as a target damping force command value, not as the current command I*, the target damping force command value may be corrected instead of the current command I*.

Furthermore, in the above description, the correction gain α is gradually reduced as the absolute value of the temporal variation amount εv increases since the damping force of the damper D increases when the current command I** increases. Alternatively, in a case where the damping force adjusting unit 5 is set so that the damping force of the damper D is decreased when the current command I** increases, the correction gain α can be set so as to gradually rise as the absolute value of the temporal variation amount εv increases. In short, the correction only needs to be performed so that the damping force after the correction is reduced as compared with the damping force before the correction as the result of the correction for suppressing the occurrence of the distortion in the characteristic of the transmission damping force.

### <Second Embodiment>

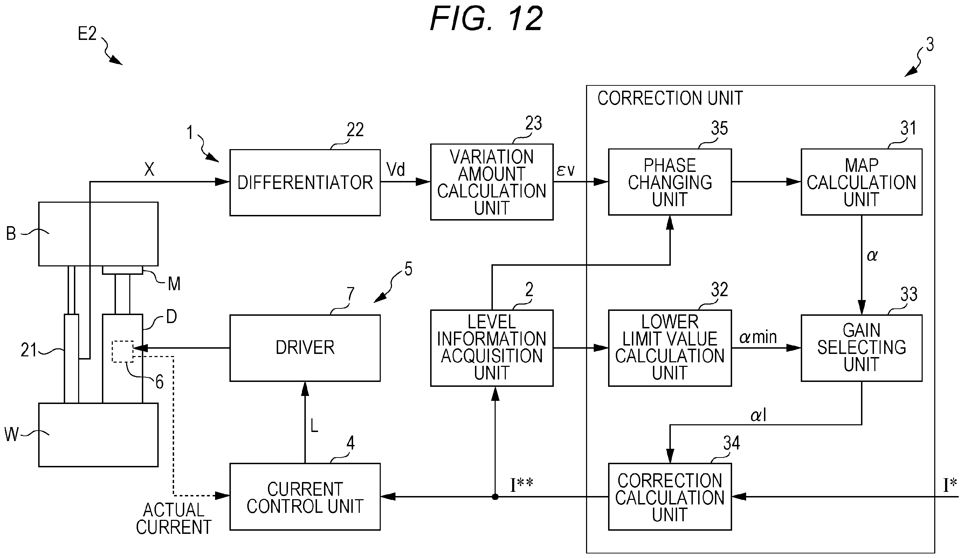

Next, a damper control device E2 of a second embodiment will be described. As illustrated in Fig. 12, the damper control device E2 of the second embodiment is configured in such a manner that a phase changing unit 35 that varies the phase of the temporal variation amount εv of the damper velocity Vd is provided in a former stage of the map calculation unit 31 of the correction unit 3 of the damper control device E2 of the first embodiment. The other components are similar to those of the damper control device E2 of the first embodiment. In order to avoid duplication of the description, the same components are only denoted by the same reference signs, and the detailed description thereof is omitted.

In the damper control device E2 of the second embodiment, the correction unit 3 is provided with the phase changing unit 35 as mentioned above. In the present embodiment, the phase changing unit 35 is configured to delay the phase of the temporal variation amount εv of the damper velocity Vd, and more specifically includes a variable low-pass filter capable of changing the cutoff frequency using the level information.

The current command I** is input to the phase changing unit 35 as the level information, and the cutoff frequency is varied in accordance with the current command I**. The damping force characteristic level is large when the current command I** is large. Both in the extension side shift stroke and in the compression side shift stroke, the timing at which the distortion of the damper occurs at the large damping force characteristic level is later than that at the small damping force characteristic level. Therefore, the phase changing unit 35 changes the cutoff frequency so that the cutoff frequency is lowered as the current command I** increases.

When the phase changing unit 35 is provided in this manner, the phase of the temporal variation amount εv is delayed in accordance with the damping force characteristic level, and a time delay occurs in the correction gain αl with respect to the correction gain αl of the damper control device E1 of the first embodiment. In the extension side shift stroke and the compression side shift stroke, the timing at which the distortion of the damper occurs is temporally delayed with respect to the ideal damping force characteristic. Therefore, when the correction gain αl is temporally delayed in accordance with the damping force characteristic level, the current command I* is corrected at the most suitable timing for the damping force characteristic level at that time, and the damping force can be reduced in a timely manner at the timing at which the distortion occurs in the characteristic of the transmission damping force, whereby the occurrence of the distortion can be suppressed more effectively. This distortion occurrence suppression effect is well brought out when the correction gain αl is found directly from the map using the map groups illustrated in Figs. 9 to 11. This is because the effect of delaying the phase of the temporal variation amount εv is less likely to appear when the gain selecting unit 33 selects the correction gain lower limit value αmin. To the contrary, in a case where the correction gain αl is found directly from the map using the map groups illustrated in Figs. 9 to 11, the correction gain αl is temporally delayed without fail when the phase of the temporal variation amount εv is delayed. Therefore, the distortion occurrence suppression effect is enhanced.

In the above-mentioned description, the phase changing unit 35 is configured as the low-pass filter capable of changing the cutoff frequency in accordance with the level information. As mentioned above, the characteristic of the transmission damping force is characterized by the hysteresis that occurs with respect to the ideal damping force characteristic. Therefore, if a high-pass filter is employed as the phase changing unit 35, and the phase of the temporal variation amount εv of the damper velocity Vd is advanced, the hysteresis in the characteristic of the transmission damping force can be reduced. In this way, the hysteresis is reduced while the distortion that occurs in the characteristic of the transmission damping force is removed, and the ride quality in the vehicle can be improved. Alternatively, the phase changing unit 35 may include a band filter. In this case, the phase of the temporal variation amount εv is advanced at a frequency equal to or less than a certain frequency, and delayed at a frequency equal to or more than a certain frequency. When the frequency is appropriately set, the reduction in the hysteresis and the timely damping force correction can be performed.

This is the end of the description of the embodiments of the present invention. Needless to say, the scope of the present invention is not limited to the illustrated or explained details themselves.

### Industrial Applicability

The vehicle damper of the present invention can be utilized for the purpose of controlling the vibration of the vehicle.

### Reference Signs List

- 1: variation amount acquisition unit
- 2: level information acquisition unit
- 3: correction unit
- 4: current control unit
- 5: damping force adjusting unit
- 12: cylinder
- 13: piston
- 15: extension side chamber
- 16: compression side chamber
- 17: reservoir
- 18: suction passage
- 18a, 19a: check valve
- 19: flow aligning passage
- 20: damping passage
- 35: phase changing unit
- B: sprung member
- D: damper
- E: damper control device
- W: unsprung member

## Claims

1. A damper control device configured to control damping force of a damper interposed between a sprung member and an unsprung member in a vehicle, the damper control device comprising:
a variation amount acquisition unit configured to acquire information from which a temporal variation amount of a damper velocity of the damper is graspable, and obtain the temporal variation amount;
a level information acquisition unit configured to acquire level information from which a damping force characteristic level that is a magnitude of a damping force characteristic of the damper is graspable; and
a correction unit configured to correct the damping force of the damper based on the temporal variation amount of the damper velocity and the level information.

2. The damper control device according to claim 1, wherein
the correction unit performs a correction to reduce the damping force of the damper.

3. The damper control device according to claim 2, wherein
the correction unit makes a reduction amount for the damping force in a compression side shift stroke in which the damper shifts from extension to contraction smaller than a reduction amount for the damping force in an extension side shift stroke in which the damper shifts from contraction to extension.

4. The damper control device according to claim 2, wherein
the greater an absolute value of the temporal variation amount is, or the greater the damping force characteristic level grasped from the level information is, the more significantly the correction unit performs the correction to increase a reduction amount for the damping force of the damper.

5. The damper control device according to claim 2, wherein
the correction unit is configured to:
increase, in a compression side shift stroke, a reduction amount for the damping force of the damper in accordance with the temporal variation amount in such a range that the temporal variation amount exceeds a first compression side threshold value and is equal to or less than a second compression side threshold value, and increase, in an extension side shift stroke, a reduction amount for the damping force of the damper in accordance with the temporal variation amount in such a range that the temporal variation amount exceeds a first extension side threshold value and is equal to or less than a second extension side threshold value; and
change one or both of the first compression side threshold value and the second compression side threshold value and one or both of the first extension side threshold value and the second extension side threshold value based on the level information.

6. The damper control device according to any one of claims 1 to 5, wherein
a damping force adjusting unit configured to adjust the damping force of the damper is provided in the damper, and
the correction unit corrects the damping force of the damper by multiplying a control command to be given to the damping force adjusting unit or a control command generated in a course of generating the control command by a correction gain found from the temporal variation amount of the damper velocity.

7. The damper control device according to any one of claims 1 to 5, wherein
the correction unit holds a plurality of maps for obtaining the correction gain from the temporal variation amount, selects one or more maps from among the plurality of maps based on the level information, and finds the correction gain from the temporal variation amount by utilizing the selected map.

8. The damper control device according to claim 6, wherein
the level information is the control command for the damping force adjusting unit or the damping force characteristic level generated by the damper in accordance with the control command.

9. The damper control device according to claim 6, comprising a current control unit configured to control the damping force adjusting unit using current feedback, wherein
the level information is a current command output by the current control unit or an actual current that flows through the damping force adjusting unit.

10. The damper control device according to any one of claims 1 to 5, wherein
the variation amount acquisition unit obtains the temporal variation amount of the damper velocity based on an acceleration rate of the sprung member, an acceleration rate of the unsprung member, or a differential of suspension displacement that is relative displacement of the sprung member and the unsprung member.

11. The damper control device according to any one of claims 1 to 5, wherein
the correction unit comprises a phase changing unit configured to change a phase of the temporal variation amount, and corrects the damping force of the damper based on the temporal variation amount whose phase has been changed in the phase changing unit.

12. The damper control device according to any one of claims 1 to 5, wherein
the damper comprises:
a cylinder;
a piston configured to be slidably inserted into the cylinder;
an extension side chamber and a compression side chamber defined within the cylinder by the piston;
a reservoir;
a suction passage having a check valve that allows only a flow of a fluid directed from the reservoir to the compression side chamber;
a flow aligning passage having a check valve that allows only a flow of a fluid directed from the compression side chamber to the extension side chamber;
a damping passage communicating with the extension side chamber and the reservoir; and
a damping force adjusting unit provided in the damping passage to give flow resistance of a fluid directed from the extension side chamber to the reservoir, and
the damper control device corrects the damping force of the damper by correcting a final command value to be given to the damping force adjusting unit.

13. The damper control device according to claim 12, wherein
the damping force adjusting unit is a solenoid valve provided in the damper to change a flow passage area of a flow passage provided in the damper.

14. The damper control device according to claim 11, wherein
a damping force adjusting unit configured to adjust the damping force of the damper is provided in the damper, and
the correction unit corrects the damping force of the damper by multiplying a control command to be given to the damping force adjusting unit or a control command generated in a course of generating the control command by a correction gain found from the temporal variation amount of the damper velocity.

15. The damper control device according to claim 11, wherein
the correction unit holds a plurality of maps for obtaining the correction gain from the temporal variation amount, selects one or more maps from among the plurality of maps based on the level information, and finds the correction gain from the temporal variation amount by utilizing the selected map.

16. The damper control device according to claim 12, wherein
the damping force adjusting unit configured to adjust the damping force of the damper is provided in the damper, and
the correction unit corrects the damping force of the damper by multiplying a control command to be given to the damping force adjusting unit or a control command generated in a course of generating the control command by a correction gain found from the temporal variation amount of the damper velocity.

17. The damper control device according to claim 12, wherein
the correction unit holds a plurality of maps for obtaining the correction gain from the temporal variation amount, selects one or more maps from among the plurality of maps based on the level information, and finds the correction gain from the temporal variation amount by utilizing the selected map.
